# EUROPÄISCHE PATENTSCHRIFT

(11) **EP 2 406 069 B1**
(45) Veröffentlichungstag und Bekanntmachung des Hinweises auf die Patenterteilung: **21.05.2014**
(21) Anmeldenummer: 09774663.0
(22) Anmeldetag: 09.12.2009
(51) Int. Cl.: B32B 3/30, B32B 3/12, B64C 1/40, B60R 13/08, E04B 1/86, G10K 11/168

(54) **MEHRSCHICHTPLATTE ZUR SCHALLDÄMMUNG**
MULTILAYER BOARD FOR SOUND INSULATION
PLAQUE MULTICOUCHES POUR ISOLATION PHONIQUE

(30) Priorität: 19.12.2008 DE 102008063923; 19.12.2008 US 139001 P
(43) Veröffentlichungstag der Anmeldung: 18.01.2012
(73) Patentinhaber: Airbus Operations GmbH, 21129 Hamburg (DE)
(72) Erfinder: BOOCK, Klaus, 23714 Timmdorf (DE); REIMER, Sven, 22763 Hamburg (DE); HENTSCHEL, Lars, 21720 Grünendeich (DE)
(74) Vertreter: Maiwald Patentanwalts GmbH
(86) Internationale Anmeldenummer: PCT/EP2009/066691
(87) Internationale Veröffentlichungsnummer: WO 2010/069831

(56) Entgegenhaltungen:
- WO-A1-99/00242
- DE-B3-102007 022 616
- FR-A1- 2 228 916

## Beschreibung

### TECHNISCHES GEBIET

Die vorliegende Erfindung befasst sich mit einer Mehrschichtplatte zur Schalldämmung und einem Verfahren zu deren Herstellung. Die Erfindung betrifft insbesondere auch ein Luftfahrzeug mit einer Innenraumverkleidung mit Paneelen, welche erfindungsgemäße Mehrschichtplatten zur Schalldämmung aufweisen.

### TECHNISCHER HINTERGRUND

Zur Schalldämmung sind plattenförmige Bauteile bekannt, die so ausgestaltet sind, dass eine möglichst effiziente Reduzierung der Schallabstrahlung erreicht wird. Zur Reduzierung von Schall werden beispielsweise Mehrschichtplatten eingesetzt, die, vereinfacht gesagt, aus drei Schichten bestehen, wobei die mittlere Schicht hinsichtlich der Schalldämmung ausgestaltet ist und die beiden äußeren Schichten andere Funktionen übernehmen, wie beispielsweise den optischen Abschluss einer als Wandpaneel eingesetzten Mehrschichtplatte. Es ist z.B. bekannt, die Mittelschicht mit senkrecht zur Fläche eingebrachten offenen Schlitzen zu versehen, beispielsweise kreuzförmig angeordnete Schlitze, wodurch aufgrund der relativ großen Schlitze die Schallabstrahlung reduziert wird. Es hat sich jedoch gezeigt, dass auch die mechanische Stabilität der Mehrschichtplatte dadurch beeinträchtigt wird. Um eine Mehrschichtplatte mit erhöhter mechanischer Stabilität bereitzustellen, ist beispielsweise aus der DE 10 2007 022 616 B3 eine Mehrschichtplatte bekannt, bei der die Kernschicht mit sogenannten Schrägschlitzen ausgebildet ist, bei der sich die Schrägschlitze bei Beaufschlagung mit einer Kraft von der geschlitzten Seite her im Wesentlichen umgehend verschließen und sich somit bei einem Lastangriff eine im Wesentlichen kompakte, zusammenhängende Kemschicht mit einem Verhalten ähnlich einer massiven, nicht geschlitzten Kemschicht ergibt. Es hat sich jedoch gezeigt, dass dadurch die Bruchlast der Platten herabgesetzt wird, wenn die Belastung von der ungeschlitzten Seite her erfolgt.

### ZUSAMMENFASSUNG DER ERFINDUNG

Eine Aufgabe der Erfindung besteht daher darin, eine Mehrschichtplatte mit reduzierter Schallabstrahlung und verbesserter Stabilität zur Verfügung zu stellen.

Diese Aufgabe wird durch eine Mehrschichtplatte zur Schalldämmung gemäß dem unabhängigen Anspruch 1 sowie durch ein Verfahren zum Herstellen einer Mehrschichtplatte zur Schalldämmung gemäß dem unabhängigen Verfahrensanspruch gelöst.

In einem exemplarischen Ausführungsbeispiel ist eine Mehrschichtplatte zur Schalldämmung vorgesehen, die eine Kernschicht, eine erste Deckschicht und eine zweite Deckschicht aufweist, wobei wenigstens eine der beiden Deckschichten geschlossen ausgebildet ist. Die Kemschicht ist ferner zwischen der ersten Deckschicht und der zweiten Deckschicht angeordnet und mit den Deckschichten flächig fest verbunden. Außerdem weist die Kemschicht Schlitze auf. Erfindungsgemäß ist vorgesehen, dass sich die Schlitze innerhalb der Kemschicht in Richtung der Plattennormalen bzw. Kernschichtdicke erstrecken und die Kemschicht beidseitig parallel zu den Deckschichten verlaufende, durchgehende Randzonen aufweist.

Dadurch lassen sich Mehrschichtplatten zur Schalldämmung zur Verfügung stellen, die ein verbessertes Bruchlastverhalten aufweisen, da diejenigen Bereiche der Platte, bei denen bei einer auftretenden Flächen- oder Einzellast die höchsten Zug- und Druckkräfte auftreten können, keine Störungen in Form von Schlitzen aufweisen. Mit anderen Worten, der Übergangsbereich zwischen dem Kernmaterial und den Deckschichten wird durch die Schlitze nicht gestört, so dass in diesen spannungsmäßig am höchsten belasteten Bereichen eine optimale Kraftübertragung erfolgen kann. Ein weiterer Vorteil der erfindungsgemäßen Mehrschichtplatte besteht darin, dass die verbesserte Stabilität unabhängig von der Richtung der Belastung ist, d.h. unabhängig davon, ob die Belastung von der Vorder- oder Hinterseite her erfolgt. Gleichzeitig ist durch die Schlitze innerhalb der Kemschicht jedoch auch sichergestellt, dass das Paneel, d.h. die Mehrschichtplatte, über verbesserte akustische Eigenschaften im Vergleich zu einer Platte mit Kernschicht ohne Schlitze ausgestattet ist.

Die akustische Wirksamkeit ist unter anderem dadurch bedingt, dass bei Mehrschichtplatten im niedrigen Frequenzbereich sogenannte Lateralbiegewellen auftreten können, wobei deren Geschwindigkeit von der Gesamtbiegesteifigkeit der jeweiligen Mehrschichtplatte gekennzeichnet wird. Bezogen auf unterschiedliche Frequenzen lassen sich dabei die folgenden Phänomene unterscheiden. Bei einer Erhöhung der Frequenz kommt es zu einem langsamen Übergang der Lateralbiegewelle in eine sogenannte Lateralschubwelle, wobei deren Ausbreitungsgeschwindigkeit unabhängig von der Frequenz proportional zur Wurzel des Kemschichtschubmoduls wächst. Bei einer weiteren Erhöhung der Frequenz kommt es zu einem Übergang von der Lateralschubwelle in eine Lateralbiegewelle, wobei deren Ausbreitungsgeschwindigkeit von der Biegesteifigkeit der Deckschichten der Mehrschichtplatten definiert wird. Theoretisch ist es denkbar, den Schubmodul der Kernschicht derart auszuwählen, dass innerhalb des betrachteten Frequenzbereichs die Lateralwellen unterhalb der Schallgeschwindigkeit in Luft bleiben. In diesem Fall strahlt die Platte Schall nur sehr ineffektiv ab. In der Praxis lassen sich verschiedene Parameter, wie zum Beispiel die Dicke der Kernschicht, die Dicke der Deckschichten, deren E-Modul sowie die Dichte der Deckschichten sowie der Kemschicht variieren. Bei einer entsprechenden Abstimmung der Parameter aufeinander lässt sich eine Mehrschichtplatte mit einem verbesserten akustischen Verhalten zur Verfügung stellen. Durch Einstellen der verschiedenen Parameter wird die Biegesteifigkeit der Mehrschichtplatte bezogen auf einen Zustand ohne äußere mechanische Belastung nicht beeinflusst. Um eine akustisch wirksame Schalldämmung zu erreichen, ist die Schubsteifigkeit der Kemschicht zu reduzieren, da diese unter physikalischen Aspekten eine direkte Proportionalität mit dem Schubmodul der Kernschicht aufweist. Zur Verringerung der Schubsteifigkeit der Kernschicht sind die bereits erwähnten Schlitze der Kemschicht vorgesehen. Mit den Schlitzen ist jedoch gleichzeitig eine Reduktion der mechanischen Steifigkeit und der Bruchlast verbunden.

Durch das erfindungsgemäße Anordnen der Schlitze innerhalb der Kemschicht lassen sich die Auswirkungen hinsichtlich der Bruchlast auf ein Minimum reduzieren, da in diesem Bereich die sogenannte neutrale Phase angeordnet ist, d.h. derjenige Bereich, bei dem es bei einer auf die Fläche einwirkenden Kraft zu einer Aufhebung der aufgrund des Biegemoments entstehenden Zugkräfte auf der der Krafteinleitung abgewandten Seite und den Druckkräften auf der der Krafteinleitung zugewandten Seite kommt. Mit anderen Worten, im Bereich der neutralen Phase übernimmt die Kernschicht die Aufgabe, den Druck- und Zugbereich, d.h. die beiden äußeren Seitenflächen der Platte, voneinander beabstandet zu halten.

In einer bevorzugten Ausführungsform ist die Mehrschichtplatte zur Schalldämmung in einem Luftfahrzeug, insbesondere einem Flugzeug vorgesehen.

Die Ausbildung der Kernschichten und Deckschichten erfolgt vorzugsweise unter Verwendung von Materialien, die üblicherweise im Luftfahrzeugbau, insbesondere im Flugzeugbau und dort vor allem im Flugzeuginnenausbau verwendet werden. Dieser Aspekt ist in der Luftfahrt allgemein von grundlegender Bedeutung, da sämtliche in einem Luftfahrzeug verwendeten Materialien speziellen Zulassungsverfahren unterliegen. Für neue Konstruktionen ergibt sich bei Verwendung von konventionellen Materialien, d.h. bei Verwendung derjenigen Materialien, die bereits qualifiziert sind, ein wesentlich einfacheres Zulassungsverfahren als beim Einsatz von neuen, d.h. bisher nicht zugelassenen und nicht qualifizierten Materialien. Dabei spielen neben den bekannten Materialien auch bekannte Herstellungsprozesse eine Rolle, da auch diese bei den Zulassungsverfahren berücksichtigt werden. Bei der erfindungsgemäßen Mehrschichtplatte für die Verwendung in Flugzeugen wird daher vorzugsweise auf bekannte Materialien und bekannte Herstellungsprozesse zurückgegriffen, um die für die Luftfahrt erforderlichen Zulassungsverfahren so einfach wie möglich zu halten, wobei hier sowohl zeitliche als auch finanzielle Aspekte eine große Rolle spielen.

Es sei darauf hingewiesen, dass im Rahmen der vorliegenden Erfindung unter dem Begriff Luftfahrzeug insbesondere Flugzeuge und Hubschrauber verstanden werden.

Es sei weiter darauf hingewiesen, dass im Zusammenhang mit der vorliegenden Erfindung der Begriff Schlitz für eine beliebige längliche oder auch im Wesentlichen fläche Aussparung in einem Material verwendet wird. Zur Ausbildung eines Schlitzes können neben der Ausbildung bei der Herstellung der Kemschicht auch verschiedene Bearbeitungsmethoden zur Anwendung kommen, wie beispielsweise Fräsen, Bohren, Ätzen, Sägen, Feilen etc. Der dabei entstehende Raum, d.h. Hohlraum, führt dazu, dass in diesem Bereich keine oder zumindest nur eine sehr geringe Kraftübertragung erfolgen kann. Daraus ergibt sich auch, dass der Hohlraum entweder als Hohlraum verbleibt oder auch mit einem anderen Material, wie beispielsweise einem Schaumstoff oder einem anderen Material befüllt werden kann, bei dem eine Kraftübertragung zwischen den Schlitzwänden nur sehr reduziert erfolgen kann oder gar ausgeschlossen ist. Außerdem sei darauf hingewiesen, dass sich der Schlitz in seiner Schlitztiefe in Richtung der Kernschichtdicke erstreckt. Dabei kann der Schlitz mit seiner Schlitztiefe sowohl senkrecht zur Oberfläche der Kemschicht als auch in einem Winkel zu dieser ausgerichtet sein

Je nach der verwendeten Bearbeitungs- bzw. Herstellungsmethode der Schlitze kann der Schlitz in Schlitztiefenrichtung gerade ausgebildet sein oder auch eine davon abweichende Form im Schnitt aufweisen, beispielsweise wellenförmig oder winkelförmig.

In der Längsrichtung, d.h. in der Erstreckungsrichtung parallel zur Oberfläche der Kernschicht kann der Schlitz linear ausgebildet sein oder auch kurvig bzw. stückweise linear verlaufen. Mehrere Schlitze können dabei parallel zueinander angeordnet sein oder in einer freien Anordnung über die Plattenebene verteilt angeordnet sein.

Außerdem können mehrere Schlitze auch so angeordnet sein, dass sie sich gegenseitig schneiden, z.B. in der Art eines Gitters.

Weiter ist es auch möglich, dass die Schlitze in ihrer Längserstreckung nicht durchgehend ausgebildet sind, sondern in der Art einer gestrichelten oder strichpunktierten Linie aus miteinander nicht verbundenen Schlitzabschnitten bestehen.

In der Länge sind die Schlitze vorzugsweise bis zum Rand der Platte ausgebildet, da dies eine einfachere Anbringung der Schlitze erlaubt.

Für den Fall, dass z.B. aus konstruktiven Gründen eine geschlossene Stirnfläche der Platten erwünscht ist, können die Schlitze auch vor dem Rand aufhören.

In einer bevorzugten Ausführungsform erstrecken sich die Schlitze über 40 bis 90 Prozent der Kernschichtdicke.

Dadurch wird einerseits eine Kernschicht zur Verfügung gestellt, die über die nötige akustische Weichheit verfügt, um den abgestrahlten Schall zu reduzieren. Andererseits ist dadurch auch gewährleistet, dass die Kernschicht eine ausreichende Festigkeit über die Schlitze hinweg aufweist, um eine Platte mit ausreichender mechanischer Stabilität bei Kraftbeaufschlagung zur Verfügung zu stellen.

In einer bevorzugten Ausführungsform erstrecken sich die Schlitze über ungefähr 70 Prozent der Kernschichtdicke.

Durch Versuche konnte gezeigt werden, dass dieses Verhältnis zu einer guten Berücksichtigung der beiden unterschiedlichen Aspekte Schalldämmung und Stabilität führt.

In einem Beispiel weist die Kemschicht einen Schaumwerkstoff auf.

Gemäß der Erfindung weist die Kemschicht eine Wabenstruktur auf, bei der sich eine Vielzahl röhren- oder wabenartiger Zellen in Richtung der Kernschichtdicke erstrecken, wobei die Zellen voneinander durch Zellwände getrennt sind und die Schlitze in den Zellwänden vorgesehen sind.

Die Wabenstruktur ergibt eine möglichst große Stabilität der Kemschicht bei gleichzeitig relativ geringem Gewicht, so dass die Mehrschichtplatte insgesamt ein möglichst geringes Gewicht aufweist, das heißt, dass sich die Mehrschichtplatte vielfältig einsetzen lässt.

Die Verwendung von Wabenkernen eignet sich insbesondere in Einsatzgebieten, bei denen das Bauteilgewicht eine Rolle spielt. An allererster Stelle ist hier der Bereich der Luftfahrt zu nennen, wo die Gewichtsthematik eine besondere Rolle einnimmt. Eine Gewichtsreduktion bedeutet beim Betrieb eines Luftfahrzeugs, beispielsweise eines Flugzeugs, ökonomische und ökologische Vorteile. Der Aspekt des Bauteilgewichts erlangt durch die in letzter Zeit gestiegenen Treibstoffkosten und die mittlerweile als *common sense* betrachtete Problematik des CO₂-Ausstoßes zunehmende Bedeutung.

In einer weiter bevorzugten Ausführungsform ist die Kernschicht mehrlagig und weist wenigstens zwei Kernlagen auf, die über wenigstens eine Zwischenlage flächig miteinander verbunden sind, wobei wenigstens eine Kernlage auf der einer anderen Kernlage zugewandten Seite einseitig offene Schlitze aufweist.

Dadurch lässt sich eine möglichst einfache Schlitzung der Kernlagen vornehmen. Beispielsweise lassen sich Kernlagen, die als plattenförmiges Halbzeug zur Verfügung stehen, mit einer Säge oder einer Fräse auf einfache Art und Weise bearbeiten, indem die Schlitze von einer Seite her eingebracht werden, so dass sich auf der gegenüberliegenden Seite der Platte eine durchgehende Zone ergibt, die beim späteren Zusammenfügen mit den Deckschichten im Bereich der Deckschichten eine möglichst große Kraftübertragung ermöglicht.

Aufgrund der mehrlagigen Ausbildung ist es auf einfache Art und Weise möglich, eine Wabenstruktur mit Schlitzen auszubilden, die von der einen Seite her vorgenommen werden können, um dann eine weitere Kemlage, beispielsweise in Form einer weiteren Wabenstruktur derart flächig mit der ersten Kernlage zu verbinden, dass dadurch die einseitig offenen Schlitze der ersten Kernlage sozusagen verdeckt werden, so dass die Mehrschichtplatte auf beiden Seiten in Richtung der Deckschichten jeweils über eine durchgehende Randzone verfügt, die für eine Kraftableitung bei einer von außen einwirkenden Kraft erforderlich ist.

In einer bevorzugten Ausführungsform weisen die Kernlagen jeweils eine Wabenstruktur auf, bei der sich eine Vielzahl röhren- oder wabenartiger Zellen in Richtung der Kernschichtdicke erstrecken, wobei die Zellen voneinander durch Zellwände getrennt sind und die Schlitze in den Zellwänden vorgesehen sind.

Vorzugsweise weisen die Kernlagen die gleiche Wabenstruktur auf und die Wabenkerne sind mit ihren Waben fluchtend angeordnet.

In einer alternativen bevorzugten Ausführungsform sind die Wabenkerne der Kernlagen versetzt zueinander angeordnet.

In einer weiteren bevorzugten Ausführungsform weisen die Kernlagen unterschiedliche Wabenkerne auf.

Dadurch lassen sich aufgrund der unterschiedlichen Wabenweiten abhängig von den verwendeten Deckschichtmaterialien z.B. unterschiedlich feste Oberflächen der Platten zur Verfügung stellen.

In einer weiter bevorzugten Ausführungsform sind beispielsweise drei Kernlagen vorgesehen, von denen die äußeren die gleiche Wabenweite aufweisen und die mittlere eine davon abweichende, zum Beispiel eine größere Wabenweite.

In einer bevorzugten Ausführungsform weisen zwei Kernlagen auf den einander zugewandten Seiten einseitig offene Schlitze auf.

Dadurch lassen sich beispielsweise zwei gleichartig bearbeitete Kernlagen einfach herstellen, indem die Schlitze von der einen Seite her eingebracht werden, um anschließend mit diesen offenen Seiten einander zugeordnet zu werden, so dass eine Kernschicht bereitgestellt wird, die über die erforderlichen durchgehenden Randzonen beidseitig parallel zu den Deckschichten verfügt.

In einer weiter bevorzugten Ausführungsform weist die Kernschicht drei Kernlagen auf, wobei die mittlere Kernlage durchgehend offene Schlitze aufweist.

Da die mittlere Kernlage die Schlitze aufweist, ist es zunächst prinzipiell nicht erforderlich, dass auch die beiden äußeren Kernlagen mit Schlitzen versehen werden, was Vorteile beim Herstellungsverfahren bedeutet. Durch Abstimmen der Dicken der äußeren Kernlagen im Verhältnis zur Dicke der mittleren Kernlage lassen sich unterschiedlich hohe Schlitzanteile der gesamten Kernschicht ausbilden, d.h. Mehrschichtplatten mit unterschiedlichen akustischen Dämmeigenschaften zur Verfügung stellen.

In einer bevorzugten Ausführungsform weisen die beiden äußeren Kernlagen jeweils an der der mittleren Kernlage zugewandten Seite einseitig offene Schlitze auf.

Dadurch ergeben sich weitere Optimierungs- bzw. Anpassungsmöglichkeiten der Mehrschichtplatte bezüglich der akustischen Dämmung.

In einer bevorzugten Ausführungsform sind die Schlitze in der mittleren Kernlage nicht auf die komplette Lagendicke durchgehend ausgebildet.

Dadurch wird die Stabilität der mittleren Kernlage dahingehend verbessert, dass sich diese Kernlage einfacher handhaben lässt, da sie insgesamt etwas stabiler ist.

In einer bevorzugten Ausführungsform sind die Schlitze versetzt zueinander angeordnet.

Durch das Versetzen der Schlitze ergibt sich einerseits eine notwendige Weichheit der Kernschicht, wobei die beiden aneinander grenzenden Kernlagen aufgrund der versetzten Schlitze etwas weniger miteinander verbunden sind.

In einer bevorzugten Ausführungsvariante sind die Schlitze fluchtend zueinander angeordnet.

Dadurch wird eine verbesserte Verbindung der aneinander anliegenden Kernlagen ermöglicht.

Vorzugsweise weist die wenigstens eine Zwischenlage eine Klebeschicht auf, mit der die beiden angrenzenden Kernlagen verbunden sind.

Beispielsweise kann es sich dabei um eine als Film oder Folie aufgetragene Klebeschicht handeln, die in einem weiteren Herstellungsschritt, beispielsweise durch Erhitzen, für die erforderliche Klebewirkung, d.h. die Verbindung der beiden Kernlagen, sorgt.

Bei der Klebeschicht kann es sich beispielsweise auch um einen aufgetragenen Klebstoff handeln, der die beiden angrenzenden Kernlagen an deren gemeinsamen Berührungspunkten gezielt verbindet.

In einer weiter bevorzugten Ausführungsform kann die Verbindung von aneinander anliegenden Kernlagen im Bereich der Zwischenlage auch dadurch erfolgen, dass sich die angrenzenden Kernlagenmaterialien aufgrund äußerer Einwirkungen, beispielsweise durch Aufbringen eines Drucks oder Erwärmung, materialschlüssig miteinander verbinden.

In einer weiteren Ausführungsvariante ist die wenigstens eine Zwischenlage ein Dämpfungstape, das die Kernlagen klebend miteinander verbindet und aus einem mechanisch dämpfend wirksamen Material besteht.

Der Vorteil eines Dämpfungstapes besteht darin, dass ein Dämpfungstape zur akustischen Wirksamkeit beiträgt, indem es die Amplituden der Lateralwellen dämpft.

In einer weiteren Ausführungsvariante ist wenigstens eine Zwischenlage ein Prepreg.

Ein Prepreg eignet sich beispielsweise bei der Verwendung von Wabenkernen, die im Bereich der Hochleistungsmaterialien z.B. aus faserverstärktem Kunststoff bestehen. Bei Verwendung eines Prepregs kann die Verbindung der Kernlagen beispielsweise in einem Aushärtungsvorgang in Kombination mit der Verbindung mit den beiden Deckschichten erfolgen.

Die beschriebenen Mehrschichtplatten eignen sich insbesondere für den Einsatz im Flugzeugbau für die Innenraumverkleidung der Kabinen, insbesondere der Passagierkabinen. In diesem Bereich übernehmen Paneele neben der Raum bildenden Funktion auch ästhetische bzw. optische Funktionen. Eine wesentliche Funktion der Paneele liegt jedoch in der Schalldämmung und der reduzierten Schallabstrahlung. Beispielsweise werden die beschriebenen Mehrschichtplatten als Verkleidung der Hüllenseite, d.h. zwischen dem Kabinenraum und der Außenhaut eines Flugzeugs, oder auch als Raum teilendes Element innerhalb der Flugzeugkabine verwendet, zum Beispiel zur Abtrennung unterschiedlicher Sitzplatzkategorien oder zur Verkleidung von sanitären Einrichtungen. Als Anforderung an ein im Bereich der Kabinentrennwände und Kabinenverkleidung verwendetes Paneel ist die Reduktion der Schallausbreitung in der Kabine durch Reflexion zu nennen. Daneben besteht eine wesentliche Aufgabe aber darin, die von der Kabine aus gesehen hinter der Verkleidung befindlichen Lärmquellen, beispielsweise zwischen Flugzeughülle und Kabinenpaneel befindliche Leitungen oder auch die an den Flügeln angeordneten Triebwerke akustisch von der Passagierkabine abzutrennen.

In einer bevorzugten Ausführungsform ist vorgesehen, dass eine der beiden Deckschichten akustisch offen ausgebildet wird.

Dadurch lassen sich unter Verwendung einer Wabenstruktur für die Kernschicht die Bereiche der Kernschicht, d.h. die Zellen, zur Ausbildung eines sogenannten Helmholzresonators hinzuziehen, so dass die Mehrschichtplatte nicht nur zur Schalldämmung, sondern auch zur Absorption eingesetzt werden kann. Die akustische Durchlässigkeit kann beispielsweise durch eine Perforation der Deckschicht erreicht werden.

Beispielsweise lassen sich die zuvor beschriebenen Mehrschichtplatten mit der geschlossenen Deckschicht in Richtung der Kabine anordnen, so dass vom Kabinenraum her eine geschlossene und unempfindliche Oberfläche zur Verfügung gestellt wird. Gleichzeitig kommt es aufgrund der schallabsorbierenden Wirkung auch zu einer Schallabsorption desjenigen Schalls, der von außen auf das Verkleidungselement, d.h. die Mehrschichtplatte einwirkt.

Die Aufgabe der Erfindung wird insbesondere auch durch ein Luftfahrzeug gelöst, das eine Rumpfkonstruktion und eine innerhalb des Rumpfes ausgebildete Kabine aufweist, die zumindest teilweise von einer von Paneelen gebildeten Innenraumverkleidung umschlossen ist. Erfindungsgemäß weist wenigstens ein Teil der Paneele eine Mehrschichtplatte zur Schalldämmung nach einer der vorhergehenden Ausführungsformen auf.

Das erfindungsgemäße Luftfahrzeug weist aufgrund der erfindungsgemäßen Mehrschichtplatten eine verbesserte akustische Dämmung auf, wodurch die Aufenthaltsqualität für den Nutzer erhöht wird. Die erfindungsgemäßen Mehrschichtplatten gewährleisten dabei einerseits die bereits erwähnte akustische Schalldämmung und andererseits auch eine ausreichende Stabilität der Innenraumverkleidung. Dies ist vor dem Hintergrund von Bedeutung, dass die Innenraumverkleidung auch einem direkten Kontakt mit Passagieren ausgesetzt ist, wodurch es zu einer Beaufschlagung mit von dem Bereich des Innenraums her auf das Kabinenverkleidungspaneel wirkenden Kräfte kommen kann. Beispielsweise kommt es regelmäßig dazu, dass sich Passagiere an der Verkleidung abstützen, beispielsweise beim Verlassen des Sitzes. Oftmals kommt es auch dazu, dass sich Passagiere, die neben einer Wand sitzen, sich bei Müdigkeit an die Innenraumverkleidung anlehnen. Daneben sind aber auch diejenigen Belastungen zu erwähnen, die in der Regel kurzzeitig und punktuell in Form einer Stoßbelastung auf die Mehrschichtplatte einwirken, wie zum Beispiel bei Anstoßen mit einem Gepäckstück oder bei einem Sturz eines Passagiers gegen eine Wandverkleidung und, nicht zu vergessen, der Dekompressionsfall, wenn z. B ein Leck im Flugzeugrumpf entsteht. Die Innenraumverkleidung ist also unterschiedlichen Belastungen ausgesetzt, denen sie widerstehen muss bzw. deren Kräfte sie an tragende Teile ableiten muss. Aufgrund der Ausbildung der Mehrschichtplatten, die für die Innenraumverkleidung verwendet werden, bei denen die akustisch erforderlichen Schlitze lediglich in einem Bereich angeordnet sind, der für die Übertragung der Zug- und Druck-Spannungen nur wenig oder gar nicht herangezogen wird, wird eine stabile Innenraumverkleidung des Luftfahrzeugs zur Verfügung gestellt. Die Verbesserung der akustischen Dämmung ohne negative Beeinflussung der Stabilität berücksichtigt selbstverständlich auch den Aspekt des Bauteilgewichts, da die Verbesserung der Akustik ohne eine Erhöhung des Bauteilgewichts einhergeht, vielmehr kommt es aufgrund der vorgesehenen Schlitze zu einer, wenn auch nur geringen, Reduzierung des Bauteilgewichts gegenüber einer Mehrschichtplatte ohne verbesserte Schalldämmung.

Erfindungsgemäß ist auch ein Verfahren zum Herstellen einer Mehrschichtplatte zur Schalldämmung vorgesehen.

In einer bevorzugten Ausführungsform des Verfahrens sind folgende Schritte vorgesehen: Zunächst wird eine Kemschicht bereitgestellt durch Anbringen von Schlitzen in wenigstens einer ersten Kemlage, wobei sich die Schlitze von der einen Seite her in Richtung der Kemlagendicke derart erstrecken, dass die wenigstens erste Kernlage eine parallel zur Kernlagenfläche verlaufende, durchgehende Randzone aufweist, sowie durch Anordnen einer Zwischenlage auf der Seite der Kernlage mit den offenen Schlitzen und Auflegen einer zweiten Kernlage auf die Zwischenlage. Anschließend wird die Kernschicht zwischen einer ersten Deckschicht und einer zweiten Deckschicht angeordnet, wobei wenigstens eine der beiden Deckschichten geschlossen ausgebildet ist. Dann wird die Kemschicht mit den Deckschichten verbunden, wobei die Kemschicht mit den Deckschichten flächig fest verbunden wird.

Die Schlitze innerhalb der Kemschicht ergeben eine reduzierte Schubsteifigkeit der Platte, was zu einer verminderten Schallabstrahlung führt, also eine besser akustische Dämmung bewirkt. Die durchgehenden Randzonen auf beiden Seiten der Kernschicht gewährleisten eine möglichst gute Kraftübertragung in diesen Bereichen durch Zusammenwirken mit den äußeren Deckschichten. Durch die Randzonen lässt sich eine Verbundwirkung erreichen, die derjenigen von ungeschlitzten Platten entspricht. Mit anderen Worten, die Platte kann trotz verbesserter akustischer Dämmeigenschaften ähnliche, bzw. genauso hohen Zug- und Druckkräften standhalten.

In einer weiter bevorzugten Ausführungsform ist ein Verfahren vorgesehen, bei dem vor dem Auflegen der zweiten Kernschicht Schlitze in der zweiten Kernschicht angebracht werden, die sich von der einen Seite her in Richtung der Kernlagendicke derart erstrecken, dass die zweite Kernlage eine parallel zur Kernlagenfläche verlaufende, durchgehende Randzone aufweist. Danach wird die zweite Kernlage mit der Seite mit den offenen Schlitzen auf die Zwischenlage aufgelegt wird, wobei die Schlitze fluchtend angeordnet werden.

Dadurch lassen sich die Schlitze möglichst einfach herstellen und die Mehrschichtplatte kostengünstig herstellen.

Insbesondere wird als Kernschichtmaterial Wabenkernmaterial verwendet, das sich H aufgrund seines geringen Gewichts bei gleichzeitig hoher mechanischer Belastbarkeit besonders für den Innenausbau im Bereich der Luftfahrt eignet.

In einer bevorzugten Ausführungsform des Verfahrens zur Herstellung werden die benötigten Materialien bereits als Halbzeug fertig bezogen. Die Waben werden von einem Zulieferer angefertigt und bereits dort geschlitzt. Bei den Varianten, bei denen die Schlitze nicht in voller Höhe vorgenommen werden, sind die Waben flächig zusammengehalten, so dass sie wie Wabenkemplatten ohne Schlitze gehandhabt werden können. Zusätzlich werden als Zwischenschicht Prepregs angeliefert, die aus Glasgewebe, oder anderen Fasern, bestehen und mit bereits mit Harz getränkt sind, das noch nicht ausgehärtet ist. Die so angelieferten Schichten werden nach Bedarf übereinander gelegt. Da das Prepreg sozusagen noch klebrig ist, lassen sich alle Schichten ausreichend gut miteinander verbinden. Danach wird der gesamte Aufbau in den Autoklaven geschoben und bei hohen Temperaturen ausgehärtet. Der Zuschnitt kann entweder vor oder nach dem Aufeinanderlegen erfolgen sowie auch nach dem Aushärten.

Die Erfindung bezieht sich vorzugsweise auch auf die Verwendung einer Mehrschichtplatte nach einer der vorhergehend beschriebenen Ausführungsformen in einem Luftfahrzeug, insbesondere in einem Flugzeug.

### KURZE BESCHREIBUNG DER ZEICHNUNGEN

Nachfolgend wird anhand der beigefügten Zeichnungen näher auf Ausführungsbeispiele der Erfindung eingegangen. Es zeigen:
- Fig. 1: einen Querschnitt durch ein Flugzeug mit einer Kabinenverkleidung mit erfindungsgemäßen Mehrschichtplatten;
- Fig. 2: eine schematische Schnittdarstellung einer erfindungsgemäßen Mehrschichtplatte;
- Fig. 3: eine isometrische Explosionsdarstellung der Mehrschichtplatte aus Fig. 2;
- Fig. 4: eine Schnittdarstellung einer weiteren Ausführungsform;
- Fig. 5: eine Schnittdarstellung einer weiteren Ausführungsform;
- Fig. 6: einen Vergleich des Schalldämmmaßes zwischen einer erfindungsgemäß geschlitzten Wabenplatte und einer ungeschlitzten Wabenplatte;
- Fig. 7: die Gegenüberstellung der Bruchfestigkeiten einer ungeschlitzten Platte, einer herkömmlich geschlitzten Platte und einer erfmdungsgemäßen Mehrschichtplatte; und
- Fig. 8: wesentliche Verfahrensschritte zur Herstellung einer erfindungsgemäßen Mehrschichtplatte.

### DETAILLIERTE BESCHREIBUNG VON EXEMPLARISCHEN AUSFÜHRUNGSBEISPIELEN

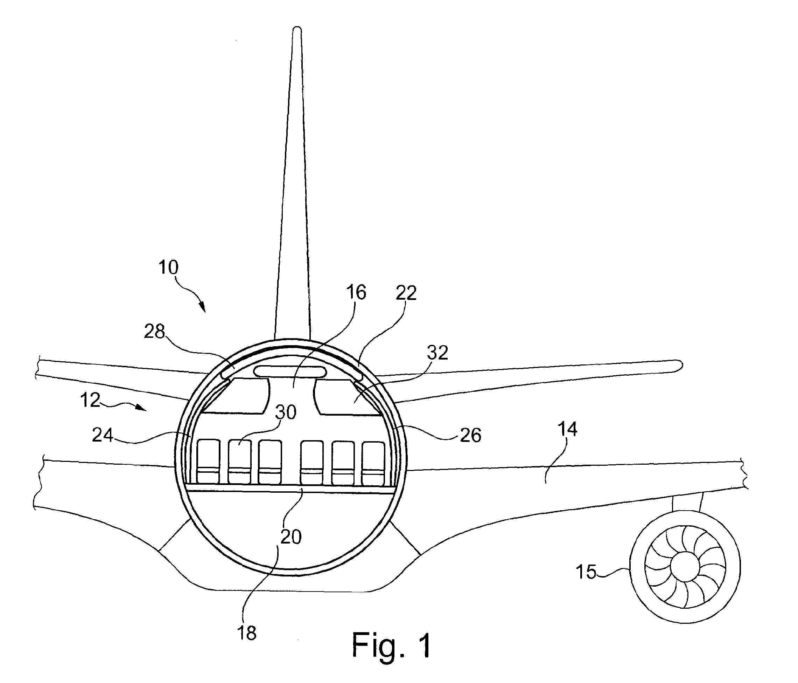

In Fig. 1 ist ein Flugzeug 10 mit einem Flugzeugrumpf 12 sowie zwei seitlich daran anschließenden Flügeln 14 gezeigt, an denen Triebwerke 15 befestigt sind, von denen nur eines gezeigt ist. In Fig. 1 ist der Flugzeugrumpf 12 quer zu seiner Längsachse geschnitten dargestellt. Wie ersichtlich ist, weist der Flugzeugrumpf 12 einen oberen Kabinenbereich 16 und einen darunter angeordneten Frachtbereich 18 auf, die durch einen horizontal verlaufenden Boden 20 voneinander getrennt sind. Der Flugzeugrumpf 12 ist mit einer im Wesentlichen umlaufenden Flugzeugaußenhaut 22 ausgebildet, die an einer Flugzeugrumpfstruktur befestigt ist, welche der Übersichtlichkeit halber nicht dargestellt ist. Die Flugzeugrumpfstruktur weist üblicherweise eine Art tragende Struktur aus Spanten und Stringern auf und gewährleistet eine stabile Konstruktion, in welche äußere und innere Lasten eingeleitet werden können.

Der oberhalb des Bodens 20 angeordnete Kabinenbereich 16 weist entlang der Außenwand 22 seitliche Kabinenverkleidungen 24, 26 sowie eine obere Kabinenverkleidung 28 im oberen Bereich auf. Wie ersichtlich ist, umschließen die Elemente der Kabinenverkleidung 24, 26, 28 zusammen mit dem Boden 20 einen Innenraum, d.h. die Kabine 16. Für die Nutzung der Kabine können beispielsweise Sitze 30 für die Passagiere angeordnet sein. Oberhalb der Sitzreihen sind außerdem Gepäckaufnahmefächer 32 vorgesehen, die der Aufnahme des Handgepäcks der Passagiere dienen. Außerdem können im Kabinenbereich 16 auch diverse Versorgungsleitungen vorgesehen sein, zum Beispiel eine Sauerstoffversorgung, die elektrische Versorgung oder auch Lüftungsanlagen, wobei auf deren Darstellung in Fig. 1 der Übersichtlichkeit halber verzichtet worden ist.

Die äußeren Lasten, beispielsweise Windlasten und aus Druckunterschieden resultierende Lasten auf dem Rumpfbereich, werden von der Außenhaut 22 an die Tragstruktur des Flugzeugrumpfes übertragen und damit abgeleitet. Zur Nutzung der Kabine als Passagierkabine ist es erforderlich, eine Kabine mit geeigneten Aufenthaltsbedingungen zur Verfügung zu stellen. Dazu weist die Außenwandkonstruktion in der Regel auch eine Wärmedämmung auf, die innerhalb der Außenhaut an dieser befestigt ist. Weiterhin ist die Außenwandkonstruktion möglichst schalldämmend ausgebildet, um z.B. einen Lärmeintrag von den Turbinen 15 in die Kabine 16 hinein auf ein Minimum zu beschränken.

Die Kabinenverkleidungselemente 24, 26, 28 dienen dazu, sowohl die raumabschließende Funktion zu übernehmen als auch die akustischen Verhältnisse innerhalb der Kabine 16 zu verbessern. Dazu können die Kabinenpaneele 24, 26, 28 z.B. schalldämmend und schallabsorbierend ausgestaltet werden.

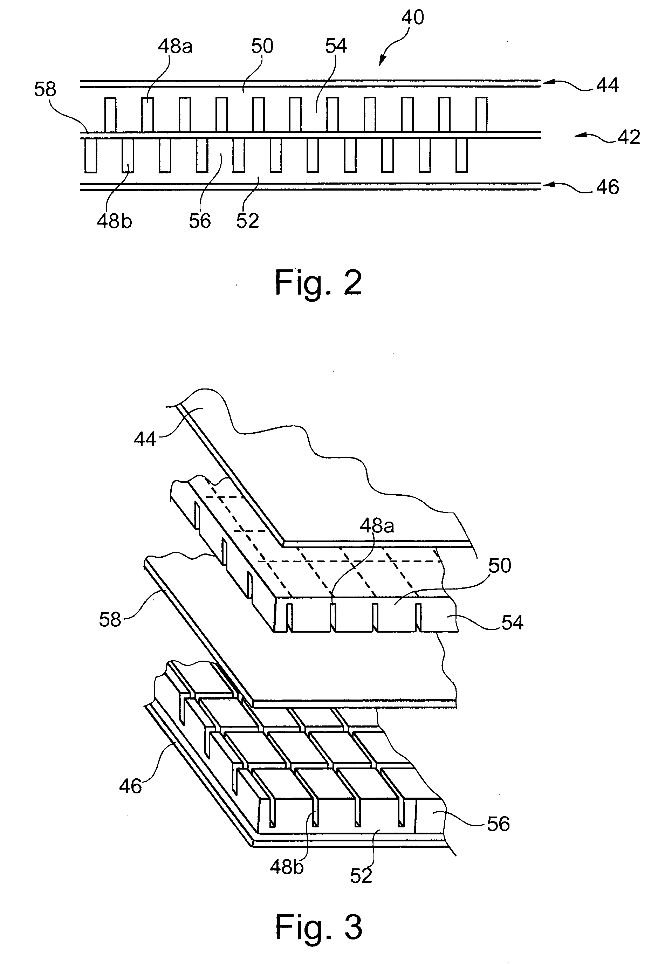

In Fig. 2 ist ein Querschnitt durch ein erfindungsgemäßes Flugzeugkabinenpaneel in Form einer Mehrschichtplatte 40 dargestellt. Die Mehrschichtplatte 40 weist eine Kernschicht 42, eine erste Deckschicht 44 sowie eine zweite Deckschicht 46 auf. Die beiden Deckschichten 44, 46 sind geschlossen ausgebildet, d.h. akustisch möglichst geschlossen ausgebildet. An dieser Stelle sei jedoch darauf hingewiesen, dass es erfindungsgemäß auch ausreichend wäre, nur eine der beiden Deckschichten akustisch geschlossen auszubilden.

Die Kernschicht 42 ist zwischen der ersten Deckschicht 44 und der zweiten Deckschicht 46 angeordnet und mit den Deckschichten 44, 46 flächig fest verbunden. Erfindungsgemäß weist die Kemschicht 42 Schlitze 48 auf, die sich innerhalb der Kemschicht 42 in Richtung der Kernschichtdicke erstrecken, und die Kernschicht 42 weist beidseitig parallel zu den Deckschichten 44, 46 verlaufende durchgehende Randzonen 50, 52 auf.

In dem gezeigten Ausführungsbeispiel ist die Kernschicht 42 mehrlagig aufgebaut und weist eine erste Lage 54 sowie eine zweite Kernlage 56 auf, die über eine Zwischenlage 58 flächig miteinander verbunden sind.

Die beiden Kernlagen 54, 56 weisen auf den einander zugewandten Seiten, d.h. den Seiten zur Zwischenschicht 58 hin, offene Schlitze 48a, 48b auf, die versetzt zueinander angeordnet sind.

Die Schlitze 48a, 48b erstrecken sich über ca. 70 Prozent der jeweiligen Dicke der beiden Kernlagen 54, 56, das heißt, die Schlitze 48 erstrecken sich über 70 Prozent der Kernschichtdicke.

Zur Verbindung der beiden Kernlagen 54, 56 weist die Zwischenlage 58 ein Dämpfungstape auf, das die Kernlagen 54, 56 klebend miteinander verbindet und aus einem mechanisch dämpfend wirksamen Material besteht.

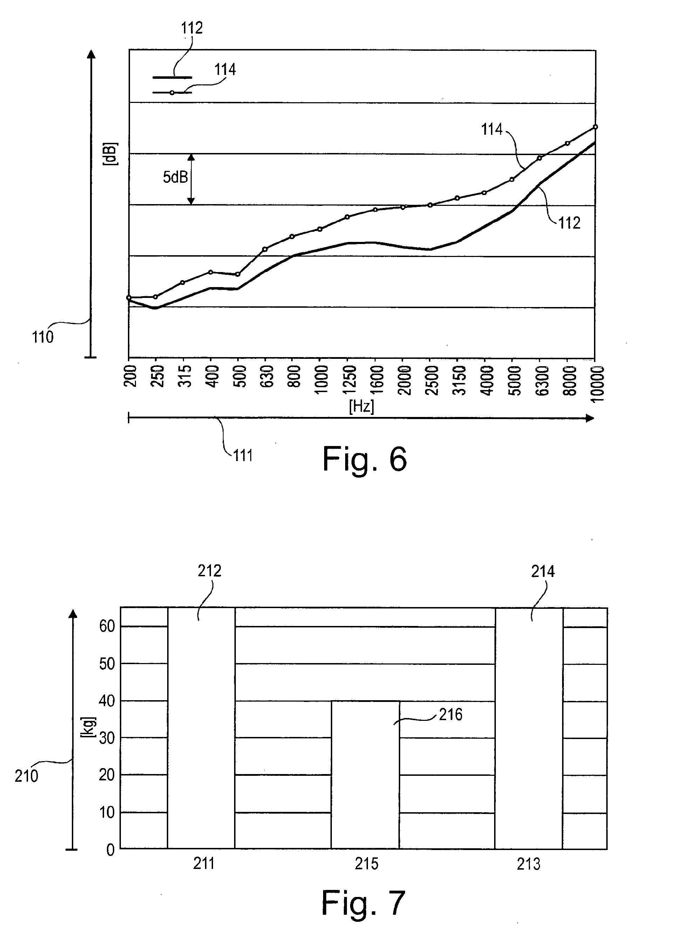

Aufgrund der Schlitze 48 der Kemschicht 42 wird die Schubsteifigkeit der Mehrschichtplatte 40 reduziert, was zu einer Reduzierung der Biegewellengeschwindigkeit führt. Dabei sind die Schlitze 48 derart auszubilden, dass es zu einer Wegnahme von Material kommt, so dass eine Kraftübertragung zwischen den Schlitzwänden ausgeschlossen ist. Durch die Verwendung eines Dämpfungstapes wird eine zusätzliche Verbesserung der Schalldämmung erreicht. Gleichzeitig ermöglicht die Ausbildung der durchgehenden Randzonen einen optimalen Kraftbereich im Übergangsbereich zwischen der Kemschicht und den Deckschichten, d.h. eines Bereichs, der spannungsmäßig am höchsten belastet ist. Da die akustisch wirksamen Schlitzungen im Bereich der Plattenmitte, d.h. im Bereich der neutralen Phase bei einer Belastung quer zur Plattenfläche, angeordnet sind, kommt es zu keiner bzw. nur zu einer sehr verringerten Beeinflussung der mechanischen Stabilität bezüglich der auf die Fläche einwirkenden Lasten. Dies soll anhand der Ergebnisse von Tests aufgezeigt werden, die in Fig. 6 und Fig. 7 dargestellt sind.

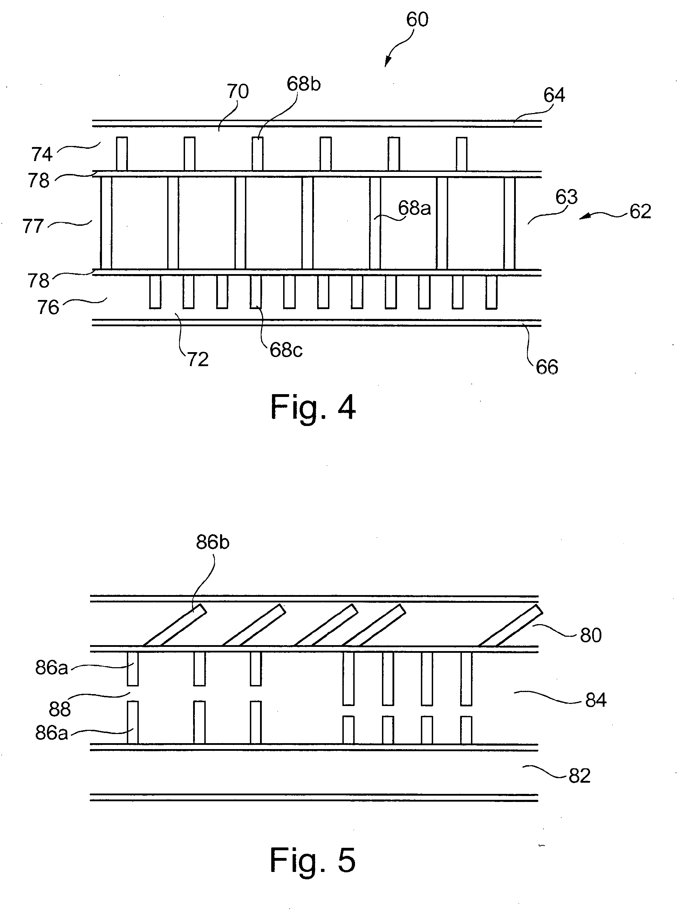

In Fig. 4 ist eine Variante einer Mehrschichtplatte 60 gezeigt, bei der eine Kernschicht 62 zwischen zwei Deckschichten 64, 66 angeordnet und mit den Deckschichten flächig fest verbunden ist. Dazu sind in der Kemschicht 62 beidseitig parallel zu den Deckschichten 64, 66 verlaufende durchgehende Randzonen 70, 72 vorgesehen. Die Kemschicht 62 ist dreilagig ausgebildet und weist eine erste Lage 74 sowie eine zweite Kernlage 76 auf, zwischen denen eine mittlere dritte Kernlage 77 angeordnet ist. Die Kernlagen 74, 76, 77 sind über eine Zwischenlage 78 flächig miteinander verbunden. Um eine zusätzliche Verbesserung der Schalldämmung der Platten zu erreichen, ist die Zwischenlage 78 jeweils als Dämpfungstape ausgebildet.

In dem gezeigten Ausführungsbeispiel sind in der mittleren Kernlage 77 durchgehend offene Schlitze 68a ausgebildet. Die anderen beiden Kernlagen 74, 76 weisen jeweils an der der mittleren Kernlage 77 zugewandten Seite einseitig offene Schlitze 68b, 68c auf. Die Schlitze können dabei, wie dargestellt, versetzt angeordnet sein. Die Schlitze können aber auch fluchtend ausgerichtet sein. In Fig. 4 weisen die Schlitze 68b der ersten Kernlage 74 einen anderen Abstand auf, als die Schlitze 68c der zweiten Kernlage 76. Die Schlitze können erfindungsgemäß auch gleiche oder völlig verschiedene Abstände, auch untereinander, aufweisen.

Es sei auch darauf hingewiesen, dass die Schlitze der Einfachheit halber mit relativ großer Breite dargestellt sind. Die Schlitze können selbstverständlich auch schmaler oder breiter ausgeführt sein.

In Fig. 5 ist eine weitere Ausführungsform gezeigt, mit der auf beispielhafte unterschiedliche Ausbildungsmöglichkeiten der Schlitze hingewiesen werden soll. Wie ersichtlich ist, weist die Mehrschichtplatte eine erste Kernlage 80, eine zweite Kernlage 82 und eine mittlere Kernlage 84 auf. Die mittlere Kernlage 84 weist Schlitze 86a auf, die jedoch nicht durchgehend ausgebildet sind, so dass jeweils ein Stück der Kernlage als Steg 88 verbleibt. Dabei kann der verbleibende Steg 88 zwischen den Schlitzhälften unterschiedlich angeordnet sein, z.B. mittig oder versetzt. Der Steg 88 trägt zur Stabilität der Platte insbesondere bei großen Schlitzlängen bei und vereinfacht damit die Handhabung bei der Herstellung der Platten.

Die erste Kernlage 80 weist ebenfalls Schlitze 86b auf, die z.B. schräg, d.h. in einem Winkel zur Flächennormalen, angeordnet sind. Die zweite Kernlage 82 weist keine Schlitze auf und ist im Verhältnis zur ersten Kernlage 80 dünner ausgebildet. Die Schlitze 86b der ersten Kernlage 80 sowie die Schlitze 86a der mittleren Kernlage 84 weisen unterschiedliche Abstände auf und sind teilweise versetzt und teileweise fluchtend zueinander angeordnet.

In Fig. 6 ist das experimentell ermittelte Schalldämmmaß einer erfindungsgemäßen Mehrschichtplatte mit Schlitzen innerhalb der Kemschicht im Vergleich zu einer Referenzplatte ohne Schlitzung dargestellt. In Fig. 6 ist in der Senkrechten das Schalldämmmaß 110 aufgetragen und in der Horizontalen die Frequenz 111. Die ermittelten Werte einer ungeschlitzten Platte sind in einer ersten Kurve 112 dargestellt und die Werte einer erfindungsgemäßen Platte in einer zweiten Kurve 114. Es ist ersichtlich, dass das Schalldämmmaß durch die Schlitzung besonders im Bereich der sogenannten Koinzidenz in Fig. 6 im Frequenzbereich von 1,5 kHz bis 5 kHz, verbessert wird, da die verringerte Schubwellengeschwindigkeit der Mehrschichtplatte zu einer verminderten Schallabstrahlung und somit zu einer besseren Schalldämmung führt.

Die erfindungsgemäße Mehrschichtplatte zeichnet sich jedoch nicht nur durch eine verbesserte Schalldämmung aus, sondern weist auch eine verbesserte Bruchfestigkeit gegenüber der eingangs erwähnten geschlitzten Platte auf, wie dies aus Fig. 7 ersichtlich ist. Fig. 7 zeigt die Ergebnisse eines Bruchtests, bei dem die Belastung von verschiedenen Platten sukzessive gesteigert wurde, bis das Versagen der Platten eintrat bzw. bis die festgelegte Maximalbelastung erreicht wurde. Dafür sind in Fig. 7 drei unterschiedliche Platten in der Horizontalen nebeneinander angeordnet und deren Belastung 210 in der Vertikalen angegeben.

Aus Fig. 7 ist ersichtlich, dass es bei einer ungeschlitzten Platte 211 zu einer hohen Belastung gekommen ist, was durch das Balkendiagramm 212 gezeigt ist. Bei dem erreichten Wert ist die Platte nicht gebrochen. Im Vergleich dazu kam es bei der Belastung einer erfindungsgemäßen Mehrschichtplatte 213, die bereits in Fig. 6 in ihrer akustischen Wirksamkeit einer herkömmlichen Platte gegenübergestellt worden ist, zu einem vergleichbaren Wert, das heißt, die erfindungsgemäße Mehrschichtplatte 213 überstand die festgelegte Maximalbelastung ebenso unbeschadet wie die ungeschlitzte Referenzplatte 211, was mit dem Balkendiagramm 214 gezeigt ist. Im Vergleich dazu führte ein Vergleichstest mit einer herkömmlich geschlitzten Wabenplatte 215, bei der eine Kemschicht über Schlitze verfügt, die einseitig offen sind, zu einem Versagen in Form eines sogenannten Grabenbruchs, wobei der in einem Balkendiagramm 216 dargestellte Wert deutlich geringer ist als die Werte der beiden anderen Diagramme 212, 214.

Die erfindungsgemäße Mehrschichtplatte eignet sich daher bezüglich ihrer mechanischen Eigenschaften für die gleichen Einsatzgebiete wie eine ungeschlitzte Platte. Gleichzeitig weist die erfindungsgemäße Mehrschichtplatte 40 jedoch ein verbessertes Schalldämmmaß auf, so dass sie bei Verwendung in dem in Fig. 1 gezeigten Luftfahrzeug in Form von Paneelen der Innenraumverkleidung zu einer Verbesserung der Aufenthaltsqualität bezüglich der akustischen Verhältnisse führt.

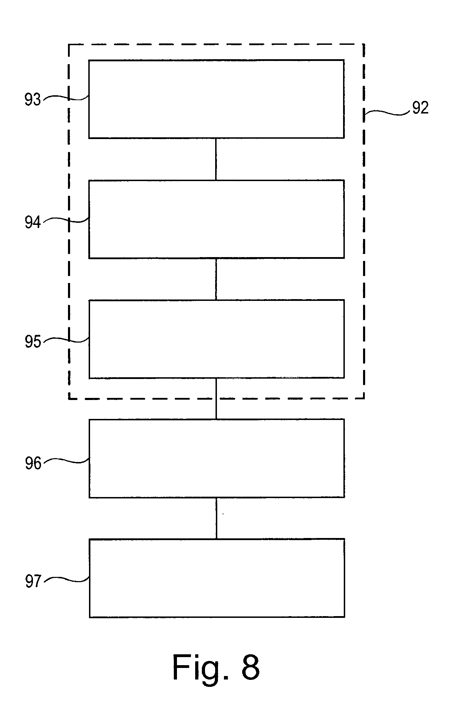

In Fig. 8 sind schematisch die wesentlichen Schritte für die Herstellung einer erfindungsgemäßen Mehrschichtplatte gemäß Abb. 3 dargestellt. In einem ersten Verfahrensabschnitt 92 wird eine Kernschicht bereitgestellt. Dafür werden zunächst Schlitze in wenigstens einer ersten Kernlage angebracht 93, wobei sich die Schlitze von der einen Seite her in Richtung der Kernlagendicke derart erstrecken, dass die wenigstens erste Kernlage eine parallel zur Kernlagenfläche verlaufende, durchgehende Randzone aufweist. Dann wird eine Zwischenlage auf der Seite der ersten Kernlage mit den offenen Schlitzen angeordnet 94. Anschließend wird eine zweite Kernlage auf die Zwischenlage aufgelegt 95. Bei mehr als zwei Kernlagen erfolgen entsprechend weitere Schritte, d.h. Anordnen einer weiteren Zwischenschicht und Auflagen einer weiteren Kernlage. Danach wird die Kernschicht zwischen einer ersten und einer zweiten Deckschicht angeordnet 96, wobei wenigstens eine der beiden Deckschichten geschlossen ausgebildet ist. Anschließend wird die Kemschicht mit den Deckschichten flächig fest verbunden 97.

In einer bevorzugten beispielhaften Ausführung der Herstellung werden die benötigten Materialien bereits als Halbzeug fertig bezogen. Beispielsweise werden die Waben von einem Zulieferer angefertigt und bereits geschlitzt. Bei den Varianten, bei denen die Schlitze nicht in voller Höhe vorgenommen werden, werden die Waben flächig zusammengehalten, so dass sie wie Wabenkernplatten ohne Schlitze gehandhabt werden können. Zusätzlich werden zum Beispiel Prepregs angeliefert, die aus Glasgewebe, oder anderen Fasern, bestehen und mit bereits mit Harz getränkt sind, wobei das Harz noch nicht ausgehärtet ist. Die so angelieferten Schichten werden nach Bedarf übereinander gelegt. Da das Prepreg sozusagen noch klebrig ist, lassen sich alle Schichten ausreichend gut miteinander verbinden. Danach wird der gesamte Aufbau in den Autoklaven geschoben und bei hohen Temperaturen ausgehärtet. Der Zuschnitt kann entweder vor oder nach dem Aufeinanderlegen erfolgen sowie auch nach dem Aushärten.

Anschließend kann der plattenförmige Werkstoff noch auf die genauen Abmessungen abgestimmt werden, z.B. zugeschnitten oder gesägt werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Mehrschichtplatte zur Schalldämmung, aufweisend
- eine Kemschicht (42; 62; 84);
- eine erste Deckschicht (44; 64) und
- eine zweite Deckschicht (46; 66);
wobei wenigstens eine der beiden Deckschichten akustisch geschlossen ausgebildet ist; wobei die Kernschicht zwischen der ersten Deckschicht und der zweiten Deckschicht angeordnet ist und mit den Deckschichten flächig fest verbunden ist;
wobei die Kernschicht (42; 62; 84) Schlitze (48; 68; 86) aufweist;
wobei die Kernschicht (42; 62; 84) eine Wabenstruktur aufweist, bei der sich eine Vielzahl röhren- oder wabenartiger Zellen in Richtung der Kernschichtdicke erstrecken, wobei die Zellen voneinander durch Zellwände getrennt sind und die Schlitze in den Zellwänden vorgesehen sind; und
wobei sich die Schlitze innerhalb der Kemschicht in Richtung der Kernschichtdicke erstrecken und die Kemschicht beidseitig parallel zu den Deckschichten verlaufende, durchgehende Randzonen (50, 52; 70, 72) aufweist.

2. Mehrschichtplatte nach Anspruch 1, **dadurch gekennzeichnet, dass** sich die Schlitze über 70 % der Kernschichtdicke erstrecken.

3. Mehrschichtplatte nach einem der vorhergehenden Ansprüche, **dadurch gekennzeichnet, dass** die Kemschicht (42) mehrlagig ist und wenigstens zwei Kernlagen (54, 56) aufweist, die über wenigstens eine Zwischenlage (58) flächig miteinander verbunden sind; wobei wenigstens eine Kernlage auf der einer anderen Kernlage zugewandten Seite einseitig offene Schlitze aufweist.

4. Mehrschichtplatte nach Anspruch 3, **dadurch gekennzeichnet, dass** die Kernlagen jeweils eine Wabenstruktur aufweisen, bei der sich eine Vielzahl röhren- oder wabenartiger Zellen in Richtung der Kemlagendicke erstrecken.

5. Mehrschichtplatte nach Anspruch 3 oder 4, **dadurch gekennzeichnet, dass** zwei Kernlagen (54, 56) auf den einander zugewandten Seiten einseitig offene Schlitze (48a, 48b) aufweisen.

6. Mehrschichtplatte nach einem der Ansprüche 3 bis 5, **dadurch gekennzeichnet, dass** die Kemschicht drei Kernlagen (74, 76, 77) aufweist; wobei die mittlere Kernlage (77) durchgehend offene Schlitze (68a) aufweist.

7. Mehrschichtplatte nach Anspruch 6, **dadurch gekennzeichnet, dass** die anderen beiden Kernlagen (74, 76) jeweils an der der mittleren Kernlage (7) zugewandten Seite einseitig offene Schlitze (68b, 68c) aufweisen.

8. Mehrschichtplatte nach einem der Ansprüche 5 bis 7, **dadurch gekennzeichnet, dass** die Schlitze (48; 68; 86) versetzt zueinander angeordnet sind.

9. Mehrschichtplatte nach einem der Ansprüche 5 bis 7, **dadurch gekennzeichnet, dass** die Schlitze fluchtend zueinander angeordnet sind.

10. Mehrschichtplatte nach einem der Ansprüche 3 bis 9, **dadurch gekennzeichnet, dass** die wenigstens eine Zwischenlage (58; 78) eine Klebeschicht aufweist, mit der die beiden angrenzenden Kernlagen verbunden sind.

11. Mehrschichtplatte nach einem der Ansprüche 3 bis 10, **dadurch gekennzeichnet, dass** wenigstens eine Zwischenlage (58; 78) ein Dämpfungstape ist, das die angrenzenden Kernlagen klebend miteinander verbindet und aus einem mechanisch dämpfend wirksamen Material besteht.

12. Mehrschichtplatte nach einem der Ansprüche 3 bis 9, **dadurch gekennzeichnet, dass** wenigstens eine Zwischenlage ein Prepreg ist.

13. Luftfahrzeug (10) mit einer Rumpfkonstruktion (12) und einer innerhalb des Rumpfes ausgebildeten Kabine (16), die zumindest teilweise von einer von Paneelen (24, 26, 28) gebildeten Innenraumverkleidung umschlossen ist, **dadurch gekennzeichnet, dass** wenigstens ein Teil der Paneele eine Mehrschichtplatte (40) zur Schalldämmung nach einem der vorhergehenden Ansprüche aufweist.

14. Verfahren zum Herstellen einer Mehrschichtplatte zur Schalldämmung, aufweisend die folgenden Schritte:
- Bereitstellen (92) einer Kemschicht (42) durch:
Anbringen (93) von Schlitzen (48) in wenigstens einer ersten Kernlage (54, 56); wobei sich die Schlitze (48) von der einen Seite her in Richtung der Kemlagendicke derart erstrecken, dass die wenigstens erste Kernlage (54, 56) eine parallel zur Kernlagenfläche verlaufende, durchgehende Randzone (50, 52) aufweist;
Anordnen (94) einer Zwischenlage (58) auf der Seite der ersten Kernlage (54) mit den offenen Schlitzen; und
Auflegen (95) einer zweiten Kernlage (56) auf die Zwischenlage (58);
- Anordnen (96) der Kernschicht (42) zwischen einer ersten Deckschicht (44) und einer zweiten Deckschicht (46); wobei wenigstens eine der beiden Deckschichten (44, 46) akustisch geschlossen ausgebildet ist; und
- Verbinden (97) der Kernschicht (42) mit den Deckschichten (44, 46); wobei die Kemschicht mit den Deckschichten flächig fest verbunden wird;
wobei die Kemschicht eine Wabenstruktur aufweist, bei der sich eine Vielzahl röhren- oder wabenartiger Zellen in Richtung der Kernschichtdicke erstrecken, wobei die Zellen voneinander durch Zellwände getrennt sind und die Schlitze in den Zellwänden vorgesehen sind; und
wobei sich die Schlitze innerhalb der Kemschicht in Richtung der Kernschichtdicke erstrecken und die Kemschicht beidseitig parallel zu den Deckschichten verlaufende, durchgehende Randzonen (50, 52; 70, 72) aufweist.

## Claims

1. A multilayer board for acoustic insulation, comprising
- a core sheet (42; 62; 84);
- a first covering layer (44; 64) and
- a second covering layer (46; 66);
wherein at least one of the two covering layers is of an acoustic closed design;
wherein the core sheet is arranged between the first covering layer and the second covering layer and is firmly connected in a planar fashion to the covering layers;
wherein the core sheet (42; 62; 84) comprises slits (48; 68; 86);
wherein the core sheet (42; 62; 84) comprises a honeycomb structure in which a multitude of tube-like or honeycomb-like cells extend in the direction of the core sheet thickness, wherein the cells are separated from each other by cell walls, and slits in the cell walls are provided; and
wherein the slits extend within the core sheet in the direction of the core sheet thickness, and the core sheet on both sides comprises continuous edge zones (50, 52; 70, 72) that extend parallel to the covering layers.

2. The multilayer board of claim 1, wherein the slits extend over 70% of the core sheet thickness.

3. The multilayer board of any one of the preceding claims, wherein the core sheet (42) is multilayered and comprises at least two core layers (54, 56) that by way of at least one intermediate layer (58) are interconnected in a planar fashion; wherein at least one core layer on the side facing another core layer comprises slits that are open on one side.

4. The multilayer board of claim 3, wherein each of the core layers comprises a honeycomb structure in which a multitude of tube-like or honeycomb-like cells extend in the direction of the core sheet thickness.

5. The multilayer board of claim 3 or 4, wherein two core layers (54, 56) on the sides facing each other comprise slits (48a, 48b) that are open on one side.

6. The multilayer board of any one of claims 3 to 5, wherein the core sheet comprises three core layers (74, 76, 77), wherein the middle core layer (77) comprises continuously open slits (68a).

7. The multilayer board of claim 6, wherein at their sides facing the middle core layer (7), the other two core layers (74, 76) comprise slits (68b, 68c) that are open on one side.

8. The multilayer board of any one of claims 5 to 7, wherein the slits (48; 68; 86) are arranged so as to be offset relative to each other.

9. The multilayer board of any one of claims 5 to 7, wherein the slits are arranged so as to be aligned with each other.

10. The multilayer board of any one of claims 3 to 9, wherein the at least one intermediate layer (58; 78) comprises an adhesive layer by which the two adjacent core layers are connected.

11. The multilayer board of any one of claims 3 to 10, wherein at least one intermediate layer (58; 78) is an attenuation tape that interconnects the adjacent core layers by its adhesive effect and that comprises a material that has a mechanically absorbent effect.

12. The multilayer board of any one of claims 3 to 9, wherein at least one intermediate layer is a prepreg.

13. An aircraft (10) comprising a fuselage construction (12) and a cabin (16) formed within the fuselage, which cabin (16) at least in some regions is enclosed by an interior lining formed by panels (24, 26, 28), wherein at least some of the panels comprise a multilayer board (40) for acoustic insulation of any one of the preceding claims.

14. A method for producing a multilayer board for acoustic insulation, comprising the following steps:
- providing (92) a core sheet (42) by:
making (93) slits (48) in at least one first core layer (54, 56); wherein the slits (48) extend from one side in the direction of the core layer thickness in such a manner that the at least one first core layer (54, 56) comprises a continuous edge zone (50, 52) that extends parallel to the area of the core layer;
arranging (94) an intermediate layer (58) on the side of the first core layer (54) with the open slits; and
applying (95) a second core layer (56) to the intermediate layer (58);
- arranging (96) the core sheet (42) between a first covering layer (44) and a second covering layer (46); wherein at least one of the two covering layers (44, 46) is of an acoustic closed design; and
- connecting (97) the core sheet (42) to the covering layers (44, 46); wherein the core sheet is firmly connected in a planar fashion to the covering layers;
wherein the core sheet comprises a honeycomb structure in which a multitude of tube-like or honeycomb-like cells extend in the direction of the core sheet thickness, wherein the cells are separated from each other by cell walls, and slits in the cell walls are provided; and
wherein the slits extend within the core sheet in the direction of the core sheet thickness, and the core sheet on both sides comprises continuous edge zones (50, 52; 70, 72) that extend parallel to the covering layers.

## Revendications

1. Plaque multicouches pour isolation phonique, présentant :
- une couche d'âme (42 ; 62 ; 84) ;
- une première couche de couverture (44 ; 64) et
- une seconde couche de couverture (46 ; 66) ;
au moins l'une des deux couches de couverture étant conformée acoustiquement fermée ;
dans laquelle la couche d'âme est disposée entre la première couche de couverture et la seconde couche de couverture, et est reliée à plat et solidairement aux couches de couverture ;
dans laquelle la couche d'âme (42 ; 62 ; 84) présente des fentes (48 ; 68 ; 86);
dans laquelle la couche d'âme (42 ; 62 ; 84) présente une structure alvéolaire, dans laquelle une pluralité de cellules de type tubulaire ou alvéolaire s'étendent dans la direction de l'épaisseur de la couche d'âme, les cellules étant séparées les unes des autres par des parois de cellule et les fentes étant prévues dans les parois de cellule ; et dans laquelle les fentes s'étendent à l'intérieur de la couche d'âme dans la direction de l'épaisseur de la couche d'âme et la couche d'âme présent et des zones marginales continues (50, 52 ; 70, 72) s'étendant sur les deux faces parallèlement aux couches de couverture.

2. Plaque multicouches selon la revendication 1, **caractérisée par le fait que** les fentes s'étendent sur 70 % de l'épaisseur de la couche d'âme.

3. Plaque multicouches selon l'une des revendications précédentes, **caractérisée par le fait que** la couche d'âme (42) comporte plusieurs strates et présente au moins deux strates noyau (54, 56), qui sont reliées entre elles à plat par l'intermédiaire d'au moins une strate intermédiaire (58) ; au moins une strate noyau présentant des fentes ouvertes sur une face sur la face orientée vers une autre strate noyau.

4. Plaque multicouches selon la revendication 3, **caractérisée par le fait que** les strates noyau présentent respectivement une structure alvéolaire, dans laquelle une pluralité de cellules de type tubulaire ou alvéolaire s'étendent dans la direction de l'épaisseur de la strate noyau.

5. Plaque multicouches selon la revendication 3 ou 4, **caractérisée par le fait que** deux strates noyau (54, 56) présentent des fentes ouvertes sur une face (48a ; 48b) sur les faces orientées l'une vers l'autre.

6. Plaque multicouches selon l'une des revendications 3 à 5, **caractérisée par le fait que** la couche d'âme présente trois strates noyau (74, 76, 77) ; la strate noyau centrale (77) présentant des fentes ouvertes en continu (68a).

7. Plaque multicouches selon la revendication 6, **caractérisée par le fait que** les deux autres strates noyau (74, 76) présentent respectivement au niveau de la face orientée vers la strate noyau centrale (7) des fentes ouvertes sur une face (68b, 68c).

8. Plaque multicouches selon l'une des revendications 5 à 7, **caractérisée par le fait que** les fentes (48 ; 68 ; 86) sont disposées décalées entre elles.

9. Plaque multicouches selon l'une des revendications 5 à 7, **caractérisée par le fait que** les fentes sont disposées alignées entre elles.

10. Plaque multicouches selon l'une des revendications 3 à 9, **caractérisée par le fait que** l'au moins une strate intermédiaire (58 ; 78) présente une couche de colle, avec laquelle les deux strates noyau adjacentes sont reliées.

11. Plaque multicouches selon l'une des revendications 3 à 10, **caractérisée par le fait qu'**au moins une strate intermédiaire (58 ; 78) est une bande amortissante, qui relie de manière adhésive les strates noyau adjacentes entre elles et est constituée d'un matériau ayant un effet mécaniquement amortissant.

12. Plaque multicouches selon l'une des revendications 3 à 9, **caractérisée par le fait qu'**au moins une strate intermédiaire est un matériau composite préimprégné.

13. Aéronef (14) avec une structure de fuselage (12) et une cabine formée à l'intérieur du fuselage (16), qui est au moins partiellement entourée d'un habillage d'espace intérieur formé de panneaux (24, 26, 28), **caractérisée par le fait qu'**au moins une partie des panneaux présente une plaque multicouches (40) pour l'isolation phonique selon l'une des revendications précédentes.

14. Procédé de fabrication d'une plaque multicouches pour isolation phonique, présentant les étapes suivantes :
- fourniture(92) d'une couche d'âme (42) par :
la mise en place (93) de fentes (48) dans au moins une première strate noyau (54, 56) ; les fentes (48) s'étendant depuis une face dans la direction de l'épaisseur de la strate noyau de telle sorte que l'au moins première strate noyau (54, 56) présente une zone marginale continue (50, 52) s'étendant parallèlement à la surface de strate noyau ;
la disposition (94) d'une strate intermédiaire (58) sur la face de la première strate noyau (54) avec les fentes ouvertes ; et
la pose (95) d'une seconde strate noyau (56) sur la strate intermédiaire (58) ;
- disposition (96) de la couche d'âme (42) entre une première couche de couverture (44) et une seconde couche de couverture (46) ; au moins l'une des deux couches de couverture (44, 46) étant conformée acoustiquement fermée ; et
- raccordement (97) de la couche d'âme (42) aux couches de couverture (44, 46) ; la couche d'âme étant reliée à plat et solidairement aux couches de couverture ;
la couche d'âme présentant une structure alvéolaire, dans laquelle une pluralité de cellules de type tubulaire ou alvéolaire s'étendent dans la direction de l'épaisseur de la couche d'âme,
les cellules étant séparées les unes des autres par des parois de cellule et les fentes étant prévues dans les parois de cellule ; et
les fentes s'étendant à l'intérieur de la couche d'âme dans la direction de l'épaisseur de la couche d'âme et la couche d'âme présentant des zones marginales continues (50, 52 ; 70, 72) s'étendant sur les deux faces parallèlement aux couches de couverture.
